# EUROPÄISCHE PATENTSCHRIFT

(11) **EP 1 144 536 B1**
(45) Veröffentlichungstag und Bekanntmachung des Hinweises auf die Patenterteilung: **24.03.2004**
(21) Anmeldenummer: 99965496.5
(22) Anmeldetag: 20.12.1999
(51) Int. Cl.: C09K 3/18, C03C 17/42, C04B 41/85, C04B 41/89

(54) **VERFAHREN ZUR HERSTELLUNG EINER ULTRAPHOBEN OBERFLÄCHE AUF DER BASIS VON NICKELHYDROXID, ULTRAPHOBE OBERFLÄCHE UND IHRE VERWENDUNG**
METHOD FOR PRODUCING AN ULTRAPHOBIC SURFACE BASED ON NICKEL HYDROXIDE, ULTRAPHOBIC SURFACE AND THE USE THEREOF
PROCEDE POUR PRODUIRE UNE SURFACE ULTRAPHOBE A BASE D'HYDROXYDE DE NICKEL, SURFACE ULTRAPHOBE AINSI PRODUITE ET SON UTILISATION

(30) Priorität: 24.12.1998 DE 19860139
(43) Veröffentlichungstag der Anmeldung: 17.10.2001
(73) Patentinhaber: Sunyx Surface Nanotechnologies GmbH, 50933 Köln (DE)
(72) Erfinder: REIHS, Karsten, D-50679 Köln (DE); DUFF, Daniel-Gordon, D-51373 Leverkusen (DE); KÖHLER, Burkhard, D-51373 Leverkusen (DE)
(74) Vertreter: Kutzenberger, Helga, Dr.
(86) Internationale Anmeldenummer: PCT/EP1999/010111
(87) Internationale Veröffentlichungsnummer: WO 2000/039239

(56) Entgegenhaltungen:
- EP-A- 0 476 510
- EP-A- 0 599 136
- US-A- 4 525 425
- CHEMICAL ABSTRACTS, vol. 119, no. 20, 15. November 1993 (1993-11-15) Columbus, Ohio, US; abstract no. 207083, IWAKI, TSUTOMU ET AL: "Sealed alkaline battery and its conversion" XP002134677 & JP 05 198302 A (MATSUSHITA ELECTRIC IND CO LTD, JAPAN) 6. August 1993 (1993-08-06)

## Beschreibung

Die Erfindung betrifft ein Verfahren zur Herstellung einer Oberfläche mit ultraphoben Eigenschaften, bei dem eine im wesentlichen glatte Substratoberfläche mit Ni(OH)₂-Partikeln eines Partikeldurchmessers d₅₀ von 0,5 bis 20 µm beschichtet wird, die Ni(OH)₂-Partikel fest mit der Substratoberfläche verbunden werden, die Oberfläche dann gegebenenfalls mit einem Haftvermittler überzogen und anschließend mit einem hydrophoben oder insbesondere oleophoben Überzug versehen wird. Die Erfindung betrifft auch eine ultraphobe Oberfläche und deren Verwendung.

Ultraphobe Oberflächen zeichnen sich dadurch aus, daß der Kontaktwinkel eines Tropfens einer Flüssigkeit, in der Regel Wasser, der auf der Oberfläche liegt, deutlich mehr als 90° beträgt und daß der Abrollwinkel 10° nicht überschreitet. Ultraphobe Oberflächen mit einem Randwinkel > 150° und dem o.g. Abrollwinkel haben einen sehr hohen technischen Nutzen, weil sie z.B. mit Wasser aber auch mit Öl nicht benetzbar sind, Schmutzpartikel an diesen Oberflächen nur sehr schlecht anhaften und diese Oberflächen selbstreinigend sind. Unter Selbstreinigung wird hier die Fähigkeit der Oberfläche verstanden, der Oberfläche anhaftende Schmutz- oder Staubpartikel leicht an Flüssigkeiten abzugeben, die die Oberfläche überströmen.

Es hat deshalb nicht an Versuchen gefehlt, solche ultraphoben Oberflächen zur Verfügung zu stellen. So wird in der EP 476 510 A1 ein Verfahren zur Herstellung einer ultraphoben Oberfläche offenbart, bei dem ein Metalloxidfilm auf eine Glasfläche aufgebracht und dann unter Verwendung eines Ar-Plasmas geätzt wird. Die mit diesem Verfahren hergestellten Oberflächen haben jedoch den Nachteil, daß der Kontaktwinkel eines Tropfens, der auf der Oberfläche liegt, weniger als 150° beträgt.

Auch in der US 5 693 236 werden mehrere Verfahren zur Herstellung von ultraphoben Oberflächen gelehrt, bei denen Zinkoxid Mikronadeln mit einem Bindemittel auf eine Oberfläche gebracht werden und anschließend auf unterschiedliche Art (z.B. durch Plasmabehandlung) teilweise freigelegt werden. Die so strukturierte Oberfläche wird anschließend mit einem wasserabweisenden Mittel beschichtet. Auf diese Weise strukturierte Oberflächen weisen jedoch ebenfalls nur Kontaktwinkel um bis 150° auf.

Aus der US 4,525,425 ist ein Verfahren zur Beschichtung von Substraten mit Metallhydroxiden bekannt.

Es stellt sich deshalb die Aufgabe, ultraphobe Oberflächen und ein Verfahren zu ihrer Herstellung zur Verfügung zu stellen, die einen Kontaktwinkel ≥150°, sowie bevorzugt einen Abrollwinkel ≤10° aufweisen.

Als Abrollwinkel wird hier der Neigungswinkel einer grundsätzlich planaren aber strukturierten Oberfläche gegen die Horizontale verstanden, bei dem ein stehender Wassertropfen des Volumens 10 µl aufgrund der Schwerkraft bewegt wird, wenn die Oberfläche geneigt wird.

Die Aufgabe wird erfindungsgemäß durch die Bereitstellung eines Verfahrens zur Herstellung einer Oberfläche mit ultraphoben Eigenschaften gelöst, dadurch gekennzeichnet, daß eine im wesentlichen glatte Substratoberfläche mit Ni(OH)₂-Partikeln eines Partikeldurchmessers d₅₀ von 0,5 bis 20 µm beschichtet wird, die Ni(OH)₂-Partikel fest mit der Substratoberfläche verbunden werden, die Oberfläche dann gegebenenfalls mit einem Haftvermittler überzogen und anschließend mit einem hydrophoben oder insbesondere oleophoben Überzug versehen wird.

Eine Oberfläche, die mit den Ni(OH)₂-Partikeln beschichtet wird, kann jede beliebige Oberfläche, aus jedem beliebigen Material sein. Vorzugsweise handelt es sich jedoch um Metalloberflächen.

Beschichten im Sinne der Erfindung bedeutet, daß die Ni(OH)₂-Partikel fest mit der zu beschichtenden Oberfläche verbunden werden. Zur Beschichtung der Oberfläche mit den Ni(OH)₂-Partikeln kann deshalb jedes dem Fachmann geläufiges Verfahren eingesetzt werden. Vorzugsweise werden die Ni(OH)₂-Partikel jedoch auf die zu beschichtende Oberfläche geklebt oder mechanisch auf die Oberfläche aufgetragen und dann mittels Elektrolyse an der Oberfläche fixiert.

Vorteilhafterweise sind die Ni(OH)₂-Partikel sphärisch und weisen vorzugsweise eine Klopfdichte von 0,8 bis 4 g/cm³ mit einem mittleren Partikeldurchmesser d₅₀ von 1.5 bis 8µm.

Ebenfalls bevorzugt haben die Ni(OH)₂-Partikel eine spezifische BET-Oberfläche > 80 m²/g. Die BET-Oberfläche wird nach der N₂-Einpunkt-Methode gemessen.

Die sphärischen Ni(OH)₂-Partikel werden vorzugsweise gemäß dem in der EP-A-0 599 136 beschriebenen Verfahren hergestellt. Diese Patentanmeldung wird hiermit als Referenz eingeführt und gilt somit als Teil der Offenbarung.

In einer bevorzugten Ausführungsform wird die Oberfläche mit 5 bis 100 g Ni(OH)₂-Partikel pro m² beschichtet.

Nach dem die Oberfläche mit Ni(OH)₂-Partikeln beschichtet worden ist, wird sie mit einem hydrophoben oder insbesondere oleophoben Überzug versehen.

Ein hydrophobes Material im Sinne der Erfindung ist ein Material, das auf einer ebenen nicht strukturierten Oberfläche einen Randwinkel bezogen auf Wasser von größer als 90° zeigt.

Ein oleophobes Material im Sinne der Erfindung ist ein Material, das auf einer ebenen nicht strukturierten Oberfläche einen Randwinkel bezogen auf langkettige n-Alkane, wie n-Decan von größer als 90° zeigt.

Bevorzugt weist die ultraphobe Oberfläche eine Beschichtung mit einem hydrophoben Phobierungshilfsstoff, insbesondere einer anionischen, kationischen, amphoteren oder nichtionischen, grenzflächenaktiven Verbindung auf.

Als Phobierungshilfsmittel sind grenzflächenaktive Verbindungen mit beliebiger Molmasse anzusehen. Bei diesen Verbindungen handelt es sich bevorzugt um kationische, anionische, amophotere oder nicht-ionische grenzflächenaktive Verbindungen, wie sie z.B. im Verzeichnis "Surfactants Europa, A Dictionary of Surface Active Agents available in Europe, Edited by Gordon L. Hollis, Royal Socity of Chemistry, Cambridge, 1995 aufgeführt werden.

Als anionische Phobierungshilfsmittel sind beispielsweise zu nennen: Alkylsulfate, Ethersulfate, Ethercarboxylate, Phosphatester, Sulfosuccinate, Sulfosuccinatamide, Paraffinsulfonate, Olefinsulfonate, Sarcosinate, Isothionate, Taurate und Lingninische Verbindungen.

Als kationische Phobierungshilfsmittel sind beispielsweise quarternäre Alkylammoniumverbindungen und Imidazole zu nennen.

Amphotere Phobierungshilfsmittel sind zum Beispiel Betaine, Glycinate, Propionate und Imidazole.

Nichtionische Phobierungshilfsmittel sind beispielsweise: Alkoxylate, Alkyloamide, Ester, Aminoxide und Alkypolyglykoside. Weiterhin kommen in Frage: Umsetzungsprodukte von Alkylenoxiden mit alkylierbaren Verbindungen, wie z. B. Fettalkoholen, Fettaminen, Fettsäuren, Phenolen, Alkylphenolen, Arylalkylphenolen, wie Styrol-Phenol-Kondensate, Carbonsäureamiden und Harzsäuren.

Besonders bevorzugt sind Phobierungshilfsmittel bei denen 1 bis 100 %, besonders bevorzugt 60 bis 95 % der Wasserstoffatome durch Fluoratome substituiert sind. Beispielhaft seien perfluoriertes Alkylsulfat, perfluorierte Alkylsulfonate, perfluorierte Alkylphosphonate, perfluorierte Alkylphosphinate und perfluorierte Carbonsäuren genannt.

Bevorzugt werden als polymere Phobierungshilfsmittel zur hydrophoben Beschichtung oder als polymeres hydrophobes Material für die Oberfläche Verbindungen mit einer Molmasse M_{w}>500 bis 1.000.000, bevorzugt 1.000 bis 500.000 und besonders bevorzugt 1500 bis 20.000 eingesetzt. Diese polymeren Phobierungshilfsmittel können nichtionische, anionische, kationische oder amphotere Verbindungen sein. Ferner können diese polymeren Phobierungshilfsmittel Homo- und Copolymerisate, Pfropf- und Pfropfcopolymerisate sowie statistische Blockpolymere sein.

Besonders bevorzugte polymere Phobierungshilfsmittel sind solche vom Typ AB-, BAB- und ABC-Blockpolymere. In den AB- oder BAB-Blockpolymeren ist das A-Segment ein hydrophiles Homopolymer oder Copolymer, und der B-Block ein hydrophobes Homopolymer oder Copolymer oder ein Salz davon.

Besonders bevorzugt sind auch anionische, polymere Phobierungshilfsmittel, insbesondere Kondensationsprodukte von aromatischen Sulfonsäuren mit Formaldehyd und Alkylnaphthalinsulfonsäuren oder aus Formaldehyd, Naphthalinsulfonsäuren und/oder Benzolsulfonsäuren, Kondensationsprodukte aus gegebenenfalls substituiertem Phenol mit Formaldehyd und Natriumbisulfit.

Weiterhin bevorzugt sind Kondensationsprodukte, die durch Umsetzung von Naphtholen mit Alkanolen, Anlagerungen von Alkylenoxid und mindestens teilweiser Überführung der terminalen Hydroxygruppen in Sulfogruppen oder Halbester der Maleinsäure und Phthalsäure oder Bernsteinsäure erhältlich sind.

In einer anderen bevorzugten Ausführung ist das Phobierungshilfsmittel aus der Gruppe der Sulfobernsteinsäureester sowie Alkylbenzolsulfonate. Weiterhin bevorzugt sind sulfatierte, alkoxylierte Fettsäuren oder deren Salze. Als alkoxylierte Fettsäurealkohole werden insbesondere solche mit 5 bis 120, mit 6 bis 60, ganz besonders bevorzugt mit 7 bis 30 Ethylenoxideinheiten versehene C₆-C₂₂-Fettsäurealkohole, die gesättigt oder ungesättigt sind, insbesondere Stearylalkohol, verstanden.

Die sulfatierten alkokylierten Fettsäurealkohole liegen vorzugsweise als Salz, insbesondere als Alkali- oder Aminsalze, vorzugsweise als Diethylaminsalz vor.

Um die Haftung des hydrophoben oder oleophoben Überzugs auf der beschichteten Oberfläche zu verbessern, kann es vorteilhaft sein, die Oberfläche zunächst einmal mit einer Haftvermittlerschicht zu beschichten. Zwischen der Oberfläche und dem hydrophoben oder oleophoben Überzug wird deshalb gegebenenfalls eine Haftvermittlerschicht aufgebracht. Als Haftvermittler kommt prinzipiell jede dem Fachmann geläufige Substanz in Frage, die die Bindung zwischen der Oberfläche und dem jeweiligen hydrophoben oder oleophoben Überzug erhöht. Bevorzugte Haftvermittler, z.B. für Thiole als hydrophober Überzug, sind Edelmetallschichten z.B. aus Au, Pt oder Ag oder solche aus GaAs, insbesondere aus Gold. Die Schichtdicke der Haftvermittlerschicht beträgt bevorzugt von 10 bis 100 nm.

Mit dem erfindungsgemäßen Verfahren können ultraphobe Oberflächen hergestellt werden, bei denen der Kontaktwinkel eines Tropfens, der auf der Oberfläche liegt, ≥160° beträgt. Gegenstand der Erfindung sind deshalb auch die durch das erfindungsgemäße Verfahren erhaltenen ultraphoben Oberflächen.

Diese ultraphoben Oberflächen haben unter anderem den Vorteil, daß sie selbstreinigend sind, wobei die Selbstreinigung dadurch erfolgen kann, daß die Oberfläche von Zeit zu Zeit Regen oder bewegtem Wasser ausgesetzt wird. Durch die ultraphobe Oberfläche rollen die Wassertropfen auf der Oberfläche ab und Schmutzpartikel, die auf der Oberfläche nur sehr schlecht haften, lagern sich an der Oberfläche der abrollenden Topfen ab und werden somit von der ultraphoben Oberfläche entfernt. Diese Selbstreinigung wirkt nicht nur bei Kontakt mit Wasser sondern auch mit Öl.

Für die mit dem erfindungsgemäßen Verfahren hergestellte Oberfläche gibt es eine Vielzahl von technischen Verwendungsmöglichkeiten. Beansprucht werden deshalb auch die folgenden Anwendungen der mit dem erfindungsgemäßen Verfahren hergestellten ultraphoben Oberflächen:

Mit der durch das erfindungsgemäße Verfahren hergestellten ultraphoben Oberfläche können Schiffsrümpfe beschichtet werden, um deren Reibungswiderstand zu reduzieren.

Des weiteren kann man Sanitäranlagen, insbesondere Toilettenschüsseln mit der mit dem erfindungsgemäßen Verfahren hergestellten ultraphoben Oberfläche versehen, um deren Verschmutzungsanfälligkeit zu reduzieren.

Dadurch, daß Wasser nicht auf der mit dem erfindungsgemäßen Verfahren hergestellten ultraphoben Oberfläche anhaftet, eignet sie sich als Rostschutzmittel für unedele Metalle beliebiger Art.

Eine weitere Anwendung der ultraphoben Oberfläche ist die Beschichtung von Oberflächen, auf denen kein Wasser anhaften soll, um Vereisung zu vermeiden. Beispielhaft seien hier die Oberflächen von Wärmetauschern z.B. in Kühlschränken oder die Oberflächen von Flugzeugen genannt.

Die mit dem erfindungsgemäßen Verfahren hergestellten Oberflächen eignen sich außerdem zur Anbringung an Hausfassaden, Dächern, Denkmälern, um diese selbstreinigend zu machen.

Die mit dem erfindungsgemäßen Verfahren hergestellten ultraphobe Oberflächen eignen sich auch insbesondere zur Beschichtung von Formkörpern die lichtdurchlässig sind. Insbesondere handelt es sich dabei um lichtdurchlässige Verglasungen von Gebäuden, Fahrzeugen, Sonnenkollektoren. Dafür wird eine dünne Schicht der erfindungsgemäßen ultraphoben Oberfläche auf den Formkörper aufgedampft.

Gegenstand der Erfindung ist auch ein Werkstoff oder Baustoff aufweisend eine erfindungsgemäße ultraphobe Oberfläche.

Weiterer Gegenstand der Erfindung ist die Verwendung der erfindungsgemäßen ultraphoben Oberfläche zur reibungsvermindernden Auskleidung von Fahrzeugkarosserien, Flugzeug- oder Schiffsrümpfen.

Gegenstand der Erfindung ist auch die Verwendung der erfindungsgemäßen ultraphoben Oberfläche als selbstreinigende Beschichtung oder Beplankung von Bauten, Dächern, Fenstern, keramischem Baumaterial, z.B. für Sanitäranlagen, Haushaltsgeräte.

Gegenstand der Erfindung ist ferner die Verwendung der erfindungsgemäßen ultraphoben Oberfläche als rostschützende Beschichtung von Metallgegenständen.

Im folgenden wird das erfindungsgemäße Verfahren anhand von Beispielen erläutert, die jedoch den allgemeinen Erfindungsgedanken nicht einschränken.

### Beispiele

### Beispiel 1

Ein Nickelblech 10×10 mm², 0,3 mm dick) wurde mit Azeton entfettet und mit ca. 40%iger HNO₃ unter gelindem Erwärmen bis zur ersten NOₓ-Bildung angeätzt, gut gespült und 5 min in einer Watt's Lösung (300 g/l NiSO₄ x 6H₂O, 35g/l NiCl₂ x 6 H₂O, 40 g/l H₃BO₃, mit ca. 40 ml 5 Gew.-%iger NH₄OH Lösung auf pH 5,8 einstellen) mit 45 mA bei Raumtemperatur mit einer Pt-Gegenelektrode vernickelt.

Nach dem Abspülen wurde das so vorbereitete Nickelblech in ein Zentrifugenröhrchen auf ein Teflon-Stäbchen mit 10 mm Durchmesser und 55 mm Länge eingesetzt.

80 mg (± 3 mg) sphärisches Ni(OH)₂ mit einem mittleren Teilchendurchmesser von 2.0 µm und einer BET-Oberfläche von 88 m²/g, das gemäß dem in der EP-A- 599 136 beschriebenen Verfahren hergestellt worden ist, wurde in ein Becherglas eingewogen, mit 10 ml Watt's-Lösung (pH 5,8) versetzt, ca. 10 Sekunden im Ultraschallbad deagglomeriert und ca. 20 Sekunden mit einem Magnetrührer bei 300 U/min aufgerührt. Wichtig ist, daß sich bei dieser Aufschlämmung keine Klümpchen bilden. Von dieser Aufschlämmung wurde so viel in das Zentrifugenröhrchen gegeben, daß ca. 20 mm Flüssigkeit über dem Ni-Blech stehen. Anschließend wurde 5 Minuten bei 1000 U/min zentrifugiert. Nach der Entnahme des Blechs aus der Zentrifuge wurde die Ni(OH)₂-Schicht direkt im Zentrifugenröhrchen mittels eines Teflonaufsatzes mit Pt-Elektrode mit Nickel am Nickelsubstrat fixiert und kontaktiert (2 min, 45 mA). Schließlich wurde das Nickel-Blech mit destilliertem Wasser und in Ethanol gut abgespült und an Luft getrocknet.

Das so behandelte Ni-Blech wurde mit einer etwa 50 nm dicken Goldschicht, als Haftvermittler, durch Zerstäubung beschichtet. Dieses Beschichtung entspricht dem Verfahren, das auch für die Präparation in der Elektronenmikroskopie üblich und bei Klaus Wetzig, Dietrich Schulze, "In situ Scanning Electron Microscopy in Material Research", Seite 36-40, Akademie Verlag, Berlin 1995 beschrieben ist. Diese Literaturstelle wird hiermit als Referenz eingeführt und ist somit Teil der Offenbarung.

Schließlich wurde die Goldschicht der Probe 24 Stunden mit einigen Tropfen einer Lösung von n-Perfluoroktanthiol in α,α,α-Trifluortoluol (1 g/l) bei Raumtemperatur in einem geschlossenem Gefäß beschichtet, anschließend mit α,α,α-Trifluortoluol gespült und getrocknet.

Die Oberfläche weist für Wasser einen statischen Randwinkel von 162° auf. Bei einer Neigung der Oberfläche um < 3° rollt ein Wassertropfen ab.

### Beispiel 2

Das Ni-Blech wurde wie in Beispiel 1 mit sphärischem NI(OH)₂ beschichtet. Danach wurde das so behandelte Ni-Blech 5 Stunden lang in eine 1 Gew-%ige Lösung aus FT 248 (Perfluoroctadecansulfonat, ein Produkt der Bayer AG) in Wasser getaucht. Anschließend mit Wasser gespült und bei 60°C getrocknet.

Die Oberfläche weist für Wasser einen statischen Randwinkel von 162° auf. Bei einer Neigung der Oberfläche um < 3° rollt ein Wassertropfen ab.

### Beispiel 3

In einer 50 ml-Glasflasche wurde 0,2g Ni(OH)₂ eingewogen, mit einer 0,5 Gew.-%igen Polymerlösung aus Poly(methylmethacrylat-co-perfluoroctadecylmethacrylat) (-[CH₂-C(COOCH₃)CH₃]ₙ-co-[CH₂-C(COOC₁₈F₃₇)CH₃]ₘ; n/m=10, 50 Gew-%ige Lösung in Butanon) in Methylenchlorid auf 10g aufgefüllt und im Ultraschallbad eine Minute beschallt. Nach 10-minütigem Rühren mit einem Magnetrührer bei 300 U/min wurde mittels einer Pipette ca. 1g der Suspension auf einem Glasobjektträger 76x26 mm², 1 mm dick, der mit Azeton gereinigt worden war, aufgebracht. Nachdem das Lösmittel verdampft war, wurde der beschichtete Objektträger 2 Tage bei 160°C in einem Heizschrank getempert.

Die Oberfläche weist einen statischen Randwinkel von ≥ 158° auf. Bei einer Neigung der Oberfläche um < 3° rollt ein Wassertropfen mit einem Volumen von 10 µl ab.

## Patentansprüche

1. Verfahren zur Herstellung einer Oberfläche mit ultraphoben Eigenschaften, **dadurch gekennzeichnet, daß** eine im wesentlichen glatte Substratoberfläche mit Ni(OH)₂-Partikeln eines Partikeldurchmessers d₅₀ von 0,5 bis 20 µm beschichtet wird, die Ni(OH)₂-Partikel fest mit der Substratoberfläche verbunden werden und die Oberfläche anschließend mit einem hydrophoben oder oleophoben Überzug versehen wird.

2. Verfahren gemäß Anspruch 1, **dadurch gekennzeichnet, daß** die Ni(OH)₂-Partikel sphärisches Ni(OH)₂ sind.

3. Verfahren gemäß Anspruch 2, **dadurch gekennzeichnet, daß** die Partikel eine Klopfdichte von 0,8 bis 4 g/cm³ mit einem mittleren Partikeldurchmesser d₅₀ von 1.5 bis 8µm aufweisen.

4. Verfahren gemäß einem der Ansprüche 1 bis 3, **dadurch gekennzeichnet, daß** die Ni(OH)₂-Partikel eine spezifische BET-Oberfläche >80 m²/g aufweisen.

5. Verfahren gemäß einem der Ansprüche 1 bis 4, **dadurch gekennzeichnet, daß** 5 bis 100 g Ni(OH)₂-Partikel pro m² auf der zu beschichtenden Substratoberfläche fixiert werden.

6. Verfahren gemäß einem der Ansprüche 1 bis 5, **dadurch gekennzeichnet, daß** die Ni(OH)₂-Partikel durch Kleben oder mittels Elektrolyse fest mit der Substratoberfläche verbunden werden

7. Ultraphobe Oberfläche erhalten durch ein Verfahren gemäß einem der Ansprüche 1 bis 6.

8. Werkstoff oder Baustoff aufweisend eine ultraphobc Oberfläche gemäß Anspruch 7.

9. Verwendung der ultraphoben Oberfläche gemäß Anspruch 7 zur reibungsvermindernden Auskleidung von Fahrzeugkarosserien, Flugzeug- oder Schiffsrümpfen.

10. Verwendung der ultraphoben Oberfläche gemäß Anspruch 7 als selbstreinigende Beschichtung oder Beplankung von Bauten, Dächern, Fenstern und keramischem Baumaterial.

11. Verwendung der ultraphoben Oberfläche gemäß Anspruch 7 als rostschützende Beschichtung von Metallgegenständen.

## Claims

1. A method for the production of a surface with ultraphobic properties, **characterised in that** a substantially smooth substrate surface is coated with Ni(OH)₂ particles of a particle diameter d₅₀ of 0.5 to 20 µm, the Ni(OH)₂ particles are firmly attached to the substrate surface and the substrate is then provided with a hydrophobic or oleophobic coating.

2. A method according to claim 1, **characterised in that** the Ni(OH)₂ particles are spherical Ni(OH)₂.

3. A method according to claim 2, **characterised in that** the particles have a packed density of 0.8 to 4 g/cm³ with an average particle diameter d₅₀ of 1.5 to 8 µm.

4. A method according to one of claims 1 to 3, **characterised in that** the Ni(OH)₂ particles have a specific BET surface area of >80 m²/g.

5. A method according to one of claims 1 to 4, **characterised in that** 5 to 100 g of Ni(OH)₂ particles per m² are fixed onto the substrate surface to be coated.

6. A method according to one of claims 1 to 5, **characterised in that** the Ni(OH)₂ particle are firmly attached to the substrate surface by adhesive bonding or electrolysis.

7. An ultraphobic surface obtained by a method according to one of claims 1 to 6.

8. A material or building material comprising an ultraphobic surface according to claim 7.

9. Use of the ultraphobic surface according to claim 7 to provide a friction-reducing facing for vehicle bodies, aircraft bodies or hulls of ships.

10. Use of the ultraphobic surface according to claim 7 as a self-cleaning coating or skin on buildings, roofs, windows and ceramic building materials.

11. Use of the ultraphobic surface according to claim 7 as an antirust coating for metallic articles.

## Revendications

1. Procédé en vue de la fabrication d'une surface ayant des propriétés ultraphobes, **caractérisé en ce qu'**une surface de substrat, pour l'essentiel lisse, est revêtue de particules de Ni(OH)₂ d'un diamètre de particule d₅₀ de 0,5 à 20 µm, **en ce que** les particules de Ni(OH)₂ sont liées d'une manière solide à la surface de substrat et **en ce que** la surface est ensuite pourvue d'un revêtement hydrophobe ou oléophobe.

2. Procédé selon la revendication 1, **caractérisé en ce que** les particules de Ni(OH)₂ sont du Ni(OH)₂ sphérique.

3. Procédé selon la revendication 2, **caractérisé en ce que** les particules présentent une masse volumique après tassement de 0,8 à 4 g/cm³, avec un diamètre moyen de particule d₅₀ de 1,5 à 8 µm.

4. Procédé selon l'une quelconque des revendications 1 à 3, **caractérisé en ce que** les particules de Ni(OH)₂ présentent une surface spécifique BET > 80 m²/g.

5. Procédé selon l'une quelconque des revendications 1 à 4, **caractérisé en ce que** l'on fixe de 5 à 100 g de particules de Ni(OH)₂ par m² sur la surface de substrat à revêtir.

6. Procédé selon l'une quelconque des revendications 1 à 5, **caractérisé en ce que** les particules de Ni(OH)₂ sont liées de manière solide à la surface de substrat par collage ou par électrolyse.

7. Surface ultraphobe, obtenue par un procédé selon l'une quelconque des revendications 1 à 6.

8. Matériau ou matériel de construction présentant une surface ultraphobe selon la revendication 7.

9. Utilisation de la surface ultraphobe selon la revendication 7 en vue de l'habillement, réduisant la friction, de carrosseries de véhicules, de coques d'avions ou de navires.

10. Utilisation de la surface ultraphobe selon la revendication 7 en tant que revêtement ou bordage autonettoyant de bâtiments, de toitures, de fenêtres et de matériel de construction céramique.

11. Utilisation de la surface ultraphobe selon la revendication 7, en tant que revêtement de protection contre la rouille d'articles métalliques.
